(19) Europäisches Patentamt
European Patent Office
Office européen des brevets

(11) **EP 2 426 010 A2**

(12) **EUROPÄISCHE PATENTANMELDUNG**

(43) Veröffentlichungstag:
**07.03.2012 Patentblatt 2012/10**

(51) Int Cl.:
**B60Q 1/08** *(2006.01)*

(21) Anmeldenummer: **11007128.9**

(22) Anmeldetag: **02.09.2011**

| | |
|---|---|
| (84) Benannte Vertragsstaaten:<br>**AL AT BE BG CH CY CZ DE DK EE ES FI FR GB GR HR HU IE IS IT LI LT LU LV MC MK MT NL NO PL PT RO RS SE SI SK SM TR**<br>Benannte Erstreckungsstaaten:<br>**BA ME**<br><br>(30) Priorität: **07.09.2010  DE 102010044557** | (71) Anmelder: **Valeo Schalter und Sensoren GmbH**<br>**74321 Bietigheim-Bissingen (DE)**<br><br>(72) Erfinder:<br>• **Reihlac, Patrice**<br>  **73732 Esslingen (DE)**<br>• **Charpentier, Adrien**<br>  **70180 Stuttgart (DE)** |

(54) **Verfahren und Vorrichtung zum automatischen Einstellen einer Ausrichtung eines von einem Scheinwerfer eines Kraftfahrzeugs abgegebenen Lichts**

(57) Die Erfindung betrifft ein Verfahren sowie eine Vorrichtung (3) zum automatischen Einstellen einer Ausrichtung (4) eines von einem Scheinwerfer (2) eines Kraftfahrzeugs (1) abgegebenen Lichts (5). Es werden mittels einer optischen Einrichtung (10) ein erstes Lichtbündel (11) und ein zweites Lichtbündel (12) auf eine Fahrbahn (20) abgegeben, auf welcher sich das Kraftfahrzeug (1) befindet, und die jeweiligen, an der Fahrbahn (20) reflektierten Lichtbündel (11, 12) werden empfangen. Die Ausrichtung (4) des vom Scheinwerfer (3) abgegebenen Lichts (5) wird in Abhängigkeit von einer Auswertung der empfangenen Lichtbündel (11, 12) eingestellt. Es ist vorgesehen, dass das erste Lichtbündel (11) bezüglich einer Fahrzeuglängsrichtung (19) nach vorne auf die Fahrbahn (20) und das zweite Lichtbündel (12) nach hinten auf die Fahrbahn (20) gerichtet werden.

Fig.4

EP 2 426 010 A2

## Beschreibung

Die Erfindung betrifft ein Verfahren zum automatischen Einstellen einer Ausrichtung eines von einem Scheinwerfer eines Kraftfahrzeugs abgegebenen Lichts. Es wird ein erstes Lichtbündel und ein zweites Lichtbündel mittels einer optischen Einrichtung auf eine Fahrbahn abgegeben, auf welcher sich das Kraftfahrzeug befindet. Die jeweiligen, an der Fahrbahn reflektierten Lichtbündel werden dann empfangen. Die Ausrichtung des vom Scheinwerfer abgegebenen Lichts wird in Abhängigkeit von einer Auswertung der empfangenen Lichtbündel eingestellt. Die Erfindung betrifft auch eine Vorrichtung zum Durchführen eines derartigen Verfahrens.

Es sind bereits Verfahren aus dem Stand der Technik als bekannt zu entnehmen, welche zum automatischen Einstellen bzw. zur automatischen Justage eines Scheinwerfers bzw. des vom Scheinwerfer abgegebenen Lichts dienen. Im Allgemeinen kann die Ausrichtung des Lichts in Abhängigkeit von einer augenblicklichen Lage des Kraftfahrzeugs bezüglich der Fahrbahn eingestellt werden. Die Lage des Kraftfahrzeugs kann sich beispielsweise aufgrund einer Beschleunigung bzw. einer Abbremsung desselben verändern. Die Lage des Kraftfahrzeugs ist außerdem von der Verteilung der Lasten abhängig. Es geht hier im Wesentlichen um die Einstellung der Ausrichtung des Lichts in vertikaler Richtung, d.h. um ein Schwenken des Scheinwerfers um eine Schwenkachse, die in Fahrzeugquerrichtung verläuft. Bei automatischen Scheinwerfersystemen kann die Ausrichtung des Lichts jeweils derart angepasst werden, dass im Wesentlichen stets der gleiche Bereich vor dem Kraftfahrzeug beleuchtet wird, nämlich unabhängig von der jeweils augenblicklichen Lage des Kraftfahrzeugs, also z.B. unabhängig von dem aktuellen Nickwinkel.

Es ist auch Stand der Technik, die Ausrichtung des vom Scheinwerfer ausgegebenen Lichts in Abhängigkeit von einem Straßenprofil bzw. einem Höhenprofil der Straße zu verändern. Zu diesem Zwecke wird in der Regel eine Kamera eingesetzt, und anhand von Bilddaten der Kamera kann die Straßenneigung erkannt und die Strahlhöhe des Scheinwerfers entsprechend angepasst werden. Dies ist insbesondere bei Fahrten auf einer bergigen Strecke sehr nützlich.

Aus dem Dokument WO 01/04659 A1 ist ein Verfahren zur Bestimmung eines Zustands einer Straße bekannt. Es wird zur Bestimmung des Straßenzustandes sowohl ein Millimeterwellen-Radargerät als auch ein Infrarot-Laser verwendet. Die Echosignale des Radargeräts und die empfangenen Signale des Infrarot-Lasers werden dann miteinander kombiniert, und der Straßenzustand wird ermittelt. Die automatisierte Erkennung des Zustands der Fahrbahnoberfläche kann beispielsweise im Sinne einer Klassifizierung des Fahrbahnzustands vorgenommen werden; es kann zwischen den folgenden Zuständen unterschieden werden: trocken, feucht, Wasserlachen, Reif, Schnee, Eis und dergleichen.

Die Druckschrift US 5,633,710 A1 beschreibt ein System zur automatischen Justage eines Scheinwerfers eines Kraftfahrzeugs. Das System beinhaltet eine Antriebseinheit, mittels welcher ein Reflektor des Scheinwerfers verstellt und somit die Ausrichtung des Lichts in vertikaler Richtung verändert werden kann. Eine Infrarot-Lichtquelle strahlt ein Infrarot-Lichtbündel ab, so dass dieses Lichtbündel auf die Fahrbahn gerichtet und an dieser reflektiert wird. Das reflektierte Lichtbündel wird dann von einem optischen Sensorsystem empfangen. Die Infrarot-Lichtquelle ist an dem Reflektor montiert, so dass sie zusammen mit dem Reflektor verstellt wird. Der Reflektor wird in Abhängigkeit von einer Intensität des reflektierten Lichtbündels verstellt, nämlich derart, dass die Intensität des reflektierten Lichtbündels ein vorgegebenes Kriterium erfüllt.

Aus dem Dokument EP 0 858 931 B1 ist eine Einrichtung zur Regelung der Leuchtweite eines Scheinwerfers eines Kraftfahrzeugs bekannt. Durch eine Sendeeinrichtung werden zwei Strahlungsbündel ausgesendet, die zwei in unterschiedlichen Entfernungen angeordnete Bereiche vor dem Kraftfahrzeug bestrahlen. Die Sendeeinrichtung ist in den Scheinwerfer integriert und wird bei einer Verstellung des Scheinwerfers mitverstellt. Durch die beiden Strahlungsbündel werden nur kleine Bereiche in Form von Spots bestrahlt, die in unterschiedlichen Entfernungen vom Kraftfahrzeug liegen. Es wird ein Verhältnis der beiden Entfernungen berechnet und mit einem Sollwert verglichen. Wird eine Abweichung dieses Verhältnisses vom Sollwert festgestellt, so wird der Scheinwerfer entsprechend justiert.

Die Druckschrift US 6,709,135 B2 offenbart eine Vorrichtung zur automatischen Korrektur einer Ausrichtung eines Scheinwerfers eines Kraftfahrzeugs in Abhängigkeit von einer momentanen Lage des Kraftfahrzeugs bezüglich der Straße bzw. in Abhängigkeit von dem momentanen Nickwinkel des Kraftfahrzeugs. Es werden zwei Lichtbündel auf die Straße gerichtet, die dann von der Straße reflektiert und wieder empfangen werden. Die beiden Lichtbündel bestrahlen zwei Bereiche der Straße vor dem Kraftfahrzeug, die entlang einer parallel zur Fahrzeuglängsachse liegenden Linie voneinander beabstandet sind. Nach einer Veränderung der Lage des Kraftfahrzeugs auf der Straße bzw. des Nickwinkels verändert sich auch die Position der bestrahlten Bereiche auf der Straße relativ zueinander und in Bezug auf das Kraftfahrzeug. Diese Veränderung der Position der bestrahlten Bereiche wird detektiert, und der Scheinwerfer wird entsprechend justiert.

Eine Vorrichtung zur Regelung der Ausrichtung eines Kraftfahrzeugscheinwerfers ist außerdem aus der Druckschrift DE 603 00 794 T2 bekannt. Auch im Gegenstand gemäß diesem Dokument werden zwei Lichtbündel in Fahrzeuglängsrichtung nach vorne auf die Straße gerichtet, und die Einstellung der Ausrichtung des Scheinwerfers erfolgt in Abhängigkeit von einer Auswertung der empfangenen Lichtbündel. Die beiden Lichtbündel werden zueinander versetzt ausgesendet und verlaufen parallel zueinander.

Einerseits kann also die Einstellung der Ausrichtung des Scheinwerfers in Abhängigkeit von einer Lage des Kraftfahrzeugs bezüglich der Straße vorgenommen werden. Auf der anderen Seite kann auch - mittels einer Kamera - das Straßenprofil bzw. ein Höhenprofil der Straße ermittelt werden, und die Ausrichtung des Scheinwerfers kann auch in Abhängigkeit von dem Straßenprofil eingestellt werden.

Zur Bestimmung der jeweils augenblicklichen Lage des Kraftfahrzeugs auf der Straße werden im Stand der Technik also in der Regel zwei Lichtbündel ausgesendet, die nach vorne auf die Straße gerichtet werden. Bei der Bestimmung der Lage des Kraftfahrzeugs bzw. bei der Auswertung der reflektierten Lichtbündel ergeben sich folgende Probleme: Um eine höchstgenaue Bestimmung der augenblicklichen Lage des Kraftfahrzeugs bzw. eine höchstpräzise Einstellung des Scheinwerfers zu gewährleisten, sollten die beiden Lichtbündel in einem relativ großen Winkel relativ zueinander ausgesendet werden. Der erste bestrahlte Bereich der Straße soll also relativ nah am Kraftfahrzeug liegen, während der zweite bestrahlte Bereich in einer größeren Entfernung vom Kraftfahrzeug liegen sollte. Gerade dann ergibt sich jedoch das Problem, dass das zweite Lichtbündel unter einem relativ kleinen Winkel von der Straße reflektiert wird, jedenfalls unter einem deutlich geringeren Winkel als das erste Lichtbündel. Das reflektierte zweite Lichtbündel weist dann eine relativ geringe Lichtintensität auf, und es wird entsprechend viel Energie benötigt, damit dieses reflektierte Lichtbündel detektiert werden kann. Es ergeben sich also Probleme mit der Empfindlichkeit bei der Detektion des reflektierten Lichtbündels. Es muss im Stand der Technik prinzipiell ein Kompromiss für den Winkel geschlossen werden, so dass entweder eine genaue Einstellung des Scheinwerfers gewährleistet ist oder das reflektierte Lichtbündel durch einen Empfänger ohne Viel Aufwand detektiert werden kann. Eine besondere Herausforderung besteht darin, beides zu erreichen, nämlich ohne dass die Lichtbündel mit einer unverhältnismäßig hohen Leistung erzeugt werden müssen.

Auch die Bestimmung des Höhenprofils der Straße zur Justage des Scheinwerfers ist im Stand der Technik nicht unproblematisch: Im Stand der Technik wird das Straßenprofil anhand von Bilddaten einer Kamera ermittelt. Es bedarf dazu unter Umständen einer relativ aufwändigen Bildverarbeitung. Es wäre wünschenswert, gäbe es eine Lösung, wie das Straßenprofil auch ohne Einsatz einer Kamera bestimmt werden kann.

Es ist Aufgabe der Erfindung, eine Lösung aufzuzeigen, wie bei einem Verfahren der eingangs genannten Gattung einerseits die Ausrichtung des von dem Scheinwerfer abgegebenen Lichts besonders präzise eingestellt werden kann und andererseits die beiden Lichtbündel problemlos detektiert werden können, ohne dass die Lichtbündel mit einer unverhältnismäßig hohen Energie erzeugt werden müssen.

Diese Aufgabe wird erfindungsgemäß durch ein Verfahren mit den Merkmalen gemäß Patentanspruch 1, wie auch durch eine Vorrichtung mit den Merkmalen des Patentanspruchs 15 gelöst. Vorteilhafte Ausführungen der Erfindung sind Gegenstand der abhängigen Patentansprüche und der Beschreibung.

Ein erfindungsgemäßes Verfahren dient zum automatischen Einstellen einer Ausrichtung eines von einem Scheinwerfer eines Kraftfahrzeugs abgegebenen Lichts. Mittels einer optischen Einrichtung wird ein erstes Lichtbündel sowie ein zweites Lichtbündel auf eine Fahrbahn abgegeben, auf welcher sich das Kraftfahrzeug befindet. Die jeweiligen, an der Fahrbahn reflektierten Lichtbündel werden dann durch die optische Einrichtung empfangen. Die Ausrichtung des vom Scheinwerfer abgegebenen Lichts wird in Abhängigkeit von einer Auswertung der empfangenen Lichtbündel eingestellt. Ein Grundgedanke der Erfindung besteht darin, dass bezüglich einer Fahrzeuglängsrichtung das erste Lichtbündel nach vorne auf die Fahrbahn und das zweite Lichtbündel nach hinten auf die Fahrbahn gerichtet werden.

Der erfindungsgemäße Effekt wird somit dadurch erzielt, dass die beiden Lichtbündel nicht wie im Stand der Technik nach vorne auf die Fahrbahn gerichtet werden, sondern eines der Lichtbündel nach vorne und eines nach hinten. Auf diesem Wege gelingt es, einerseits die beiden Lichtbündel in einem relativ großen Winkel bezüglich einander auszusenden und somit eine höchstgenaue bzw. feine und präzise Einstellung der Ausrichtung des Scheinwerfers vorzunehmen und andererseits die von der Fahrbahn reflektierten Lichtstrahlen ohne viel Aufwand - auch bei einer geringen Leistung der Lichtbündel - zu detektieren. Anders als im Stand der Technik ergeben sich bei dem erfindungsgemäßen Verfahren keine Probleme hinsichtlich der Empfindlichkeit bei der Detektion der reflektierten Lichtbündel. Die beiden Lichtbündel können nämlich in einem relativ großen Winkel bezüglich der Fahrbahn ausgesendet werden, nämlich eines der Lichtbündel nach vorne und das andere Lichtbündel nach hinten. Es kann dabei dennoch ein relativ großer Winkel zwischen den beiden Lichtbündeln beibehalten werden, so dass eine höchstpräzise Einstellung des vom Scheinwerfer abgegebenen Lichts in Abhängigkeit von der jeweils augenblicklichen Lage des Kraftfahrzeugs bezüglich der Fahrbahn vorgenommen werden kann.

Das vom Scheinwerfer abgegebene Licht, dessen Ausrichtung eingestellt wird, kann ein Abblendlicht und/oder ein Fernlicht sein. Dieses Licht kann zum Beispiel ein Xenonlicht sein.

Das erste und das zweite Lichtbündel werden mithilfe der optischen Einrichtung ausgesendet. In einer Ausführungsform ist diese optische Einrichtung an einer Unterseite des Kraftfahrzeugs angeordnet. Besonders bevorzugt ist die optische Einrichtung an einer Unterseite eines vorderen Stoßfängers angebracht. Gerade dann kann ohne viel Aufwand erreicht werden, dass das erste Lichtbündel nach vorne und das zweite Lichtbündel nach hinten auf die Fahrbahn gerichtet werden. Die Anordnung der optischen Einrichtung an einer Unterseite des Kraftfahrzeugs hat außerdem den Vorteil, dass nicht in den Aufbau des Scheinwerfers eingegriffen werden muss. Der Scheinwerfer kommt - anders als im Stand der Technik - ohne eine solche optische Einrichtung aus, so dass seine Grundgestaltung nicht durch den Einsatz der optischen Einrichtung beeinträchtigt wird. Es steht somit mehr Platz für die tatsächlichen Komponenten des Scheinwerfers zur Verfügung bzw. es kann ein kompakter Scheinwerfer bereitgestellt werden.

Die Auswertung der empfangenen reflektierten Lichtbündel - also die Auswertung der beiden empfangenen Lichtbündel, welche das an der Fahrbahn reflektierte erste Lichtbündel einerseits und das an der Fahrbahn reflektierte zweite Lichtbündel andererseits sind - kann beispielsweise zum Inhalt haben, dass eine aktuelle Lage des Kraftfahrzeugs bezüglich der Fahrbahn ermittelt wird. Vorzugsweise wird in Abhängigkeit von den beiden reflektierten Lichtbündeln ein Nickwinkel des Kraftfahrzeugs ermittelt. Dann kann die Ausrichtung des vom Scheinwerfer ausgesendeten Lichts in Abhängigkeit von der Lage des Kraftfahrzeugs auf der Fahrbahn, insbesondere in Abhängigkeit von dem Nickwinkel, eingestellt werden. Es kann hier die Ausrichtung des Lichts in vertikaler Richtung eingestellt werden, also insbesondere um eine Schwenkachse, die in Fahrzeugquerrichtung verläuft. Es gelingt somit, unabhängig von dem jeweils augenblicklichen Nickwinkel bzw. unabhängig von einer Beschleunigung oder einer Abbremsung des Kraftfahrzeugs sowie unabhängig von der Lastverteilung stets den gleichen Umgebungsbereich vor dem Kraftfahrzeug zu beleuchten.

Die Ausrichtung des vom Scheinwerfer abgegebenen Lichts kann auch fortlaufend geregelt werden, nämlich in Abhängigkeit von der Auswertung der empfangenen Lichtbündel, insbesondere in Abhängigkeit von der jeweils augenblicklichen Lage des Kraftfahrzeugs bezüglich der Fahrbahn, bevorzugt abhängig von dem Nickwinkel des Kraftfahrzeugs.

Die Auswertung der empfangenen reflektierten Lichtbündel sowie die Einstellung der Ausrichtung können auch wie folgt aussehen: Anhand der jeweiligen Laufzeit der Lichtbündel werden die jeweiligen Entfernungen zwischen der optischen Einrichtung und den Reflektionspunkten ermittelt, an denen die beiden Lichtbündel an der Fahrbahn reflektiert werden. Die Entfernungen können dann mit abgelegten Referenzwerten verglichen werden, und in Abhängigkeit von diesem Vergleich kann dann die Einstellung der Ausrichtung vorgenommen werden.

Das erste und das zweite Lichtbündel werden bevorzugt in einer Ebene abgegeben, die parallel zu einer Ebene liegt, welche durch die Fahrzeuglängsachse und die Fahrzeughochachse definiert ist. Mit anderen Worten werden die beiden Lichtbündel bevorzugt parallel zur Ebene der Fahrzeuglängsachse und der Fahrzeughochachse ausgesendet. Die beiden Lichtbündel können auch in dieser Ebene ausgesendet werden. Die Reflektionspunkte der beiden Lichtbündel auf der Straße sind somit bei dieser Ausführungsform entlang einer Linie voneinander beabstandet, die parallel zur Fahrzeuglängsachse verläuft. Diese Ausführungsform hat den Vorteil, dass somit der Nickwinkel des Kraftfahrzeugs während einer Beschleunigung bzw. während einer Abbremsung des Kraftfahrzeugs besonders präzise ermittelt werden kann, nämlich in Abhängigkeit von den empfangenen reflektierten Lichtbündeln. Es kann somit eine genaue Einstellung der Ausrichtung des vom Scheinwerfer abgegebenen Lichts vorgenommen werden.

Bevorzugt wird das erste Lichtbündel bezüglich der Fahrzeughochachse in einem ersten Winkel auf die Fahrbahn gerichtet, welcher in einem Wertebereich von 10° bis 60°, insbesondere in einem Wertebereich von 10° bis 45°, liegt. Entsprechend wird das zweite Lichtbündel bevorzugt in einem zweiten Winkel bezüglich der Fahrzeughochachse auf die Fahrbahn gerichtet, welcher in einem Wertebereich von 10° bis 60° liegt, insbesondere von 10° bis 45°. Der erste und/oder der zweite Winkel kann/können beispielsweise 20° oder 25° oder 30° oder 35° oder 40° betragen. Dann ist einerseits gewährleistet, dass die Intensität der reflektierten Lichtbündel für die Detektion dieser Lichtbündel auch bei einer relativ geringen abgestrahlten Leistung ausreichend ist; andererseits ist somit der Winkel zwischen den beiden Lichtbündeln relativ groß, so dass jede Veränderung der Lage des Kraftfahrzeugs bezüglich der Fahrbahn anhand der reflektierten Lichtbündel detektiert werden kann.

Also können das erste und das zweite Lichtbündel in einem Winkel relativ zu einander ausgesendet werden, der in einem Wertebereich von 20° bis 120° liegt, insbesondere in einem Wertebereich von 40° bis 90°. Der Winkel zwischen den beiden Lichtbündeln kann beispielsweise 40° oder 45° oder 50° oder 55° oder 60° oder 65° oder 70° oder 75° oder 80° oder 85° oder 90° betragen.

Wie bereits ausgeführt kann die Auswertung der empfangenen reflektierten Lichtbündel beinhalten, dass eine aktuelle Lage des Kraftfahrzeugs bezüglich der Fahrbahn, insbesondere der Nickwinkel, bestimmt wird. Die Lage, insbesondere der Nickwinkel, kann in Abhängigkeit von Entfernungen zwischen der optischen Einrichtung und jeweiligen Punkten auf der Fahrbahn bestimmt werden, an denen die Lichtbündel reflektiert werden. Die Lage kann auch in Abhängigkeit von jeweiligen Winkeln bestimmt werden, in denen die Lichtbündel bezüglich einer Referenzachse - zum Beispiel der Fahrzeughochachse - bzw. relativ zueinander abgegeben werden. Die Entfernungen zwischen der optischen Einrichtung und den jeweiligen Reflektionspunkten können mithilfe einer Laufzeitmessung bestimmt werden; es wird dabei die jeweilige Zeit gemessen, welche das erste bzw. das zweite Lichtbündel benötigt, um zur Fahrbahn und wieder zur optischen Einrichtung zu gelangen. In Abhängigkeit von den Entfernungen bzw. abhängig von den jeweiligen Winkeln kann der Nickwinkel des Kraftfahrzeugs besonders genau ermittelt werden, und die Ausrichtung des vom Scheinwerfer abgegebenen Lichts kann besonders präzise eingestellt werden, nämlich derart, dass jeweils der gleiche Umgebungsbereich vor dem Kraftfahrzeug durch den Scheinwerfer beleuchtet wird.

Es kann auch ein drittes Lichtbündel bezüglich der Fahrzeuglängsrichtung nach vorne in einem vorbestimmten Winkel bezüglich einer Referenzachse - zum Beispiel der Fahrzeuglängsachse oder der Fahrzeughochachse - abgegeben werden, nämlich derart, dass das dritte Lichtbündel an der Fahrbahn reflektiert wird. Das reflektierte dritte Lichtbündel kann dann empfangen werden, und in Abhängigkeit von einer Auswertung des empfangenen dritten Lichtbündels kann eine Streckenneigung eines bevorstehenden Fahrbahnabschnitts der Fahrbahn bezüglich eines momentanen Fahrbahnabschnitts bestimmt werden, auf welchem sich das Kraftfahrzeug befindet. Die Ausrichtung des vom Scheinwerfer abgegebenen Lichts kann dann auch in Abhängigkeit von der Streckenneigung eingestellt werden. Also ist bei dieser Ausführungsform vorgesehen, dass die Streckenneigung bzw. ein Höhenprofil der Fahrbahn nicht wie im Stand der Technik anhand von Bilddaten einer optischen Kamera ermittelt wird, sondern in Abhängigkeit von einem an der Fahrbahn reflektierten Lichtbündel. Es kann somit ohne viel Aufwand - mit einem einzigen Lichtbündel - die Streckenneigung der Fahrbahn bestimmt werden, und das Kraftfahrzeug kommt ohne ein aufwändiges Kamerasystem aus; es erübrigt sich der Einsatz einer Kamera mit den damit verbundenen Nachteilen hinsichtlich der Bildverarbeitung und der Kosten.

Alternativ kann auf das dritte Lichtbündel verzichtet werden, und die Streckenneigung kann mithilfe desjenigen der ersten beiden Lichtbündel ermittelt werden, welches nach vorne auf die Fahrbahn gerichtet wird. Es erweist sich jedoch als besonders vorteilhaft, wenn zusätzlich zu dem ersten und dem zweiten Lichtbündel auch das dritte Lichtbündel erzeugt wird. Dann kann nämlich das dritte Lichtbündel in einem geringeren Winkel bezüglich der Fahrbahn abgegeben werden als das erste und das zweite Lichtbündel, so dass eine Straßenneigung bereits sehr früh erkannt werden kann.

Das dritte Lichtbündel kann mittels einer Lichteinheit abgegeben werden, welche in den Scheinwerfer integriert ist. Alternativ kann diese Lichteinheit an einer Unterseite des Kraftfahrzeugs, insbesondere an einer Unterseite eines vorderen Stoßfängers, angeordnet sein. Noch alternativ kann diese Lichteinheit hinter einer Windschutzscheibe des Kraftfahrzeugs platziert sein. Die Anordnung hinter der Windschutzscheibe hat den Vorteil, dass das dritte Lichtbündel an einem Punkt der Fahrbahn vor dem Kraftfahrzeug reflektiert werden kann, welcher in einem relativ großen Abstand vom Kraftfahrzeug liegt. Es kann mit anderen Worten eine relativ große Reichweite der Lichteinheit erreicht werden, und die Streckenneigung - zum Beispiel ein Gefälle oder eine Steigung der Fahrbahn - kann relativ früh detektiert werden. Die Anordnung der Lichteinheit an der Unterseite des Kraftfahrzeugs hat wiederum den Vorteil, dass durch diese Lichteinheit weder die Grundgestaltung des Scheinwerfers noch die der Windschutzscheibe beeinträchtigt wird.

Die Lichteinheit kann auch in die optische Einrichtung integriert sein, mittels welcher das erste und das zweite Lichtbündel erzeugt werden. Dann muss lediglich eine einzige optische Einheit - nämlich die optische Einrichtung - bereitgestellt werden, und das Kraftfahrzeug kommt mit lediglich einer optischen Einrichtung aus, mit welcher sowohl die Lage des Kraftfahrzeugs bezüglich der Fahrbahn als auch die Streckenneigung der Fahrbahn bestimmt werden können. Diese Ausführungsform sorgt also für die Reduktion der Anzahl der erforderlichen Bauteile.

Die Bestimmung der Streckenneigung kann beinhalten, dass ein Winkel zwischen dem bevorstehenden Fahrbahnabschnitt und dem momentanen Fahrbahnabschnitt bestimmt wird. Es kann beispielsweise anhand des reflektierten dritten Lichtbündels eine Steigung bzw. ein Gefälle der Fahrbahn detektiert werden, und die Ausrichtung des vom Scheinwerfer abgegebenen Lichts kann dann entsprechend angepasst werden. Bei einem Gefälle der Fahrbahn kann das vom Scheinwerfer erzeugte Licht in vertikaler Richtung niedriger als bei einer geraden bzw. horizontalen Fahrbahn ausgerichtet werden. Es wird somit vermieden, dass durch dieses Licht ein entgegenkommendes Kraftfahrzeug geblendet wird. Wird hingegen eine bevorstehende Steigung der Fahrbahn detektiert, so kann das Licht in vertikaler Richtung höher als bei einer geraden Fahrbahn ausgerichtet werden, so dass stets der Bereich vor dem Kraftfahrzeug bis zur gleichen Entfernung vom Kraftfahrzeug beleuchtet werden kann.

Die Streckenneigung der Fahrbahn kann auch unter Berücksichtigung des ersten und des zweiten reflektierten Lichtbündels bestimmt werden. Insbesondere kann auch die aktuelle Lage des Kraftfahrzeugs bezüglich der Fahrbahn, insbesondere der Nickwinkel, berücksichtigt werden. Ändert sich nämlich die Lage des Kraftfahrzeugs bezüglich der Straße, so verändert sich auch gleichzeitig die Ausrichtung des dritten Lichtbündels; dieses wird unter einem anderen Winkel bezüglich der Straße als bei einem stillstehenden Kraftfahrzeug ausgesendet. Gerade dieser Umstand kann bei der Auswertung des empfangenen reflektierten dritten Lichtbündels berücksichtigt werden.

Das dritte Lichtbündel kann in einem solchen Winkel auf die Fahrbahn gerichtet werden, dass bei einer geraden Fahrbahn - insbesondere bei einer horizontalen Fahrbahn - und insbesondere auch im Stillstand des Kraftfahrzeugs das dritte Lichtbündel an einem Punkt der Fahrbahn reflektiert wird, welcher in einem Abstand aus einem Wertebereich von 10 m bis 140 m vom Kraftfahrzeug liegt. Dann kann ein bevorstehendes Gefälle bzw. eine bevorstehende Steigung der Fahrbahn relativ früh erkannt werden, und die Ausrichtung des Lichts kann entsprechend früh angepasst werden.

Das dritte Lichtbündel wird vorzugsweise in einer Ebene ausgesendet, welche parallel zur Eben liegt, die durch die Fahrzeuglängsachse und die Fahrzeughochachse definiert ist. Das dritte Lichtbündel kann auch in der Ebene der Fahrzeuglängsachse und der Fahrzeughochachse ausgesendet werden. Es kann in derselben Ebene erzeugt werden, in welcher auch das erste und das zweite Lichtbündel generiert werden.

Wie bereits ausgeführt, wird das dritte Lichtbündel bezüglich der Fahrzeuglängsrichtung nach vorne gerichtet, nämlich in einem vorgegebenen Winkel bezüglich einer Referenzachse, insbesondere der Fahrzeuglängsachse oder aber der Fahrzeughochachse. Die Streckenneigung kann in Abhängigkeit von dem Winkel bestimmt werden, in welchem das dritte Lichtbündel bezüglich dieser Referenzachse abgegeben wird. Die Streckenneigung kann auch in Abhängigkeit von einer Entfernung zwischen der Lichteinheit und einem Punkt des bevorstehenden Fahrbahnabschnitts bestimmt werden, an welchem das dritte Lichtbündel reflektiert wird. Auf diesem Wege gelingt es, den Winkel zwischen dem bevorstehenden Fahrbahnabschnitt und dem aktuellen Fahrbahnabschnitt mit hoher Präzision zu ermitteln.

Nähert sich das Kraftfahrzeug einer Steigung der Fahrbahn an, so verringert sich fortlaufend die Entfernung zwischen der Lichteinheit und dem jeweiligen Punkt des bevorstehenden Fahrbahnabschnitts, an welchem das dritte Lichtbündel reflektiert wird. Diese Entfernung kann fortlaufend ermittelt werden, und die Streckenneigung kann in Abhängigkeit von dieser Entfernung ebenfalls fortlaufend bestimmt werden. Auch die Ausrichtung des Scheinwerfers kann fortlaufend geregelt werden. Es gilt nämlich die Beziehung, dass je näher sich das Kraftfahrzeug an der Steigung befindet, desto genauer die Streckenneigung bestimmt werden kann.

Darüber hinaus wird erfindungsgemäß eine Vorrichtung bereitgestellt, welche zum automatischen Einstellen einer Ausrichtung eines von einem Scheinwerfer eines Kraftfahrzeugs abgegebenen Lichts ausgebildet ist. Die Vorrichtung umfasst eine optische Einrichtung zum Abgeben eines ersten Lichtbündels und eines zweiten Lichtbündels auf eine Fahrbahn und zum Empfangen der jeweiligen, an der Fahrbahn reflektierten Lichtbündel. Die Vorrichtung umfasst auch eine Einstelleinrichtung zum Einstellen der Ausrichtung des vom Scheinwerfer abgegebenen Lichts in Abhängigkeit von einer Auswertung der empfangenen Lichtbündel. Die optische Einrichtung ist dazu ausgebildet, das erste Lichtbündel bezüglich einer Fahrzeuglängsrichtung nach vorne auf die Fahrbahn und das zweite Lichtbündel nach hinten auf die Fahrbahn zu richten.

Ein erfindungsgemäßes Kraftfahrzeug umfasst eine erfindungsgemäße Vorrichtung.

Die mit Bezug auf das erfindungsgemäße Verfahren vorgestellten bevorzugten Ausführungsformen und deren Vorteile gelten entsprechend für die erfindungsgemäße Vorrichtung sowie für das erfindungsgemäße Kraftfahrzeug.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar.

Die Erfindung wird nun anhand einzelner bevorzugter Ausführungsbeispiele, wie auch unter Bezugnahme auf die beigefügten Zeichnungen näher erläutert.

Es zeigen:

Fig. 1       in schematischer Darstellung eine Seitenansicht eines vorderen Bereichs eines Kraftfahrzeugs mit einer Vorrichtung gemäß einer Ausführungsform der Erfindung, wobei die Vorrichtung zum Einstellen einer Ausrichtung eines von einem Scheinwerfer des Kraftfahrzeugs abgegebenen Lichts ausgebildet ist;

Fig. 2       in schematischer Darstellung eine optische Einrichtung mit zwei abgegebenen Lichtbündeln bei einem stillstehenden Kraftfahrzeug bzw. bei einem Nickwinkel des Kraftfahrzeugs von 0°;

Fig. 3       die optische Einrichtung mit den Lichtbündeln bei einem geneigten Kraftfahrzeug bzw. bei einem Nickwinkel größer als 0°, wobei die Bestimmung des Nickwinkels in Abhängigkeit von empfangenen Lichtbündeln näher erläutert wird;

Fig. 4       in schematischer Darstellung eine Seitenansicht des Kraftfahrzeugs, wobei die Bestimmung einer Streckenneigung in Abhängigkeit von einem reflektierten Lichtbündel näher erläutert wird;

Fig. 5 u. 6       in schematischer Darstellung das Kraftfahrzeug sowie ein entgegen kommendes Kraftfahrzeug, wobei ein Verfahren gemäß einer Ausführungsform der Erfindung näher erläutert wird; und

Fig. 7       in schematischer Darstellung das Kraftfahrzeug auf einer Fahrbahn, wobei ein Verfahren gemäß einer Ausführungsform der Erfindung näher erläutert wird.

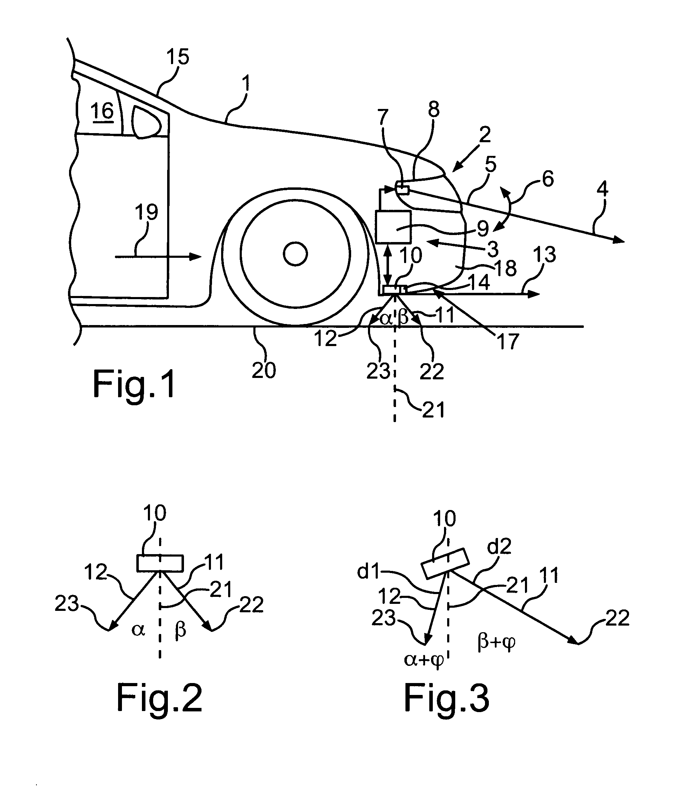

Ein Kraftfahrzeug 1, wie es in Fig. 1 in schematischer Darstellung gezeigt ist, ist im Ausführungsbeispiel ein Personenkraftwagen. Das Kraftfahrzeug 1 umfasst einen Scheinwerfer 2. Es sind bekanntlich zwei Scheinwerfer 2 bereitgestellt, nämlich ein linker und ein rechter Scheinwerfer 2. In Fig. 1 ist lediglich der rechte Scheinwerfer 2 dargestellt, wobei die nachfolgenden Ausführungen in analoger Weise auch auf den linken Scheinwerfer anwendbar sind.

Im Kraftfahrzeug 1 ist eine Vorrichtung 3 bereitgestellt, welche zum Einstellen einer Ausrichtung 4 eines vom Scheinwerfer 2 abgegebenen Lichts 5 ausgebildet ist. Die Ausrichtung 4 wird durch die Vorrichtung 3 geregelt, nämlich in Abhängigkeit von einer aktuellen Lage des Kraftfahrzeugs 1 bezüglich der Straße sowie in Abhängigkeit von einer Streckenneigung.

Die Ausrichtung 4 des Lichts 5 wird in vertikaler Richtung eingestellt, nämlich gemäß einer Pfeildarstellung 6.

Zu diesem Zwecke kann beispielsweise eine Lichtquelle 7, mittels welcher das Licht 5 erzeugt wird, in vertikaler Richtung bzw. um in Fahrzeugquerrichtung verlaufende Schwenkachse verschwenkt werden. Alternativ oder zusätzlich kann aber auch ein Reflektor 8 in vertikaler Richtung verschwenkt werden, nämlich um eine horizontal und in Fahrzeugquerrichtung verlaufende Schwenkachse.

Die Lichtquelle 7 kann beispielsweise eine Xenon-Lichtquelle sein; alternativ oder ergänzend kann die Lichtquelle 7 auch eine Mehrzahl von Leuchtdioden (LED) beinhalten.

Die Vorrichtung 3 beinhaltet eine elektronische Einstelleinrichtung 9, welche die Lichtquelle 7 und/oder den Reflektor 8 motorisch schwenken kann. Die Einstelleinrichtung 9 kann beispielsweise einen Elektromotor beinhalten, wie auch einen Mikrocontroller, welcher den Elektromotor ansteuert.

Die Vorrichtung 3 beinhaltet auch eine optische Einrichtung 10, mittels welcher im Ausführungsbeispiel insgesamt drei Lichtbündel erzeugt werden können, nämlich ein erstes Lichtbündel 11, ein zweites Lichtbündel 12 sowie ein drittes Lichtbündel 13. Zum Erzeugen des dritten Lichtbündels 13 ist in die optische Einrichtung 10 eine Lichteinheit 14 integriert. Die Lichteinheit 14 zum Erzeugen des dritten Lichtbündels 13 kann aber auch in den Scheinwerfer 2 integriert sein oder aber hinter einer Windschutzscheibe 15 im Innenraum 16 des Kraftfahrzeugs 1 angeordnet sein. Die Lichtbündel 11, 12, 13 sind im Ausführungsbeispiel Infrarot-Lichtstrahlen, die jeweils mithilfe einer Infrarot-Lichtquelle erzeugt werden.

Die optische Einrichtung 10 ist im Ausführungsbeispiel an einer Unterseite 17 eines vorderen Stoßfängers 18 angeordnet. Eine solche Anordnung ermöglicht es, das erste Lichtbündel 11 bezüglich der Fahrzeuglängsrichtung 19 nach vorne und das zweite Lichtbündel 12 nach hinten auf eine Fahrbahn 20 bzw. eine Straße zu richten, auf welcher sich das Kraftfahrzeug 1 befindet. Das erste Lichtbündel 11 wird bezüglich der Fahrzeughochachse 21 bzw. der Fahrzeughochrichtung in einem Winkel β abgegeben, während das zweite Lichtbündel 12 bezüglich der Fahrzeughochachse 21 in einem Winkel α auf die Fahrbahn 20 gerichtet wird. Der Winkel β kann betragsmäßig gleich dem Winkel α sein. Im Ausführungsbeispiel können beide Winkel α, β beispielsweise 40° betragen.

Die Lichtbündel 11, 12, 13 werden alle in einer Ebene abgegebenen, nämlich in einer Ebene, die parallel zu einer Ebene liegt, die durch die Fahrzeughochachse 21 und die Fahrzeuglängsachse definiert ist. Die Lichtbündel 11, 12, 13 können in der Ebene der Fahrzeuglängsachse und der Fahrzeughochachse 21 abgegeben werden.

Die optische Einrichtung 11 beinhaltet auch einen optischen Detektor, mittels welchem dann die von der Fahrbahn 20 reflektierten Lichtbündel 11, 12, 13 empfangen bzw. detektiert werden. Ein solcher Detektor kann beispielsweise eine Fotodiode beinhalten, welche eine Vielzahl von empfindlichen Fotozellen - zum Beispiel drei Zellen - beinhalten kann. Jede Zelle empfängt dann ein Lichtbündel. Die optische Einrichtung 10 kann also insgesamt kostengünstig bereitgestellt werden; denn es sind lediglich drei Infrarot-Lichtquellen erforderlich, wie auch eine Fotodiode mit mehreren empfindlichen Fotozellen.

Die optische Einrichtung 10 wird durch die Einstelleinrichtung 9 angesteuert, nämlich beispielsweise durch einen Mikrocontroller der Einstelleinrichtung 9. Anhand der empfangenen reflektierten Lichtbündel 11, 12, 13 kann die Einstelleinrichtung 9 die jeweiligen Entfernungen zwischen der optischen Einrichtung 10 und einzelnen Punkten 22, 23 bestimmen, an denen die Lichtbündel 11, 12, 13 auf der Fahrbahn 20 reflektiert werden. Die Entfernungen werden in Abhängigkeit von einer Laufzeit der Lichtbündel 11, 12, 13 ermittelt.

Das erste und das zweite Lichtbündel 11, 12, dienen zur Bestimmung einer aktuellen Lage des Kraftfahrzeugs 1 bezüglich der Fahrbahn 20. Und zwar wird in Abhängigkeit von den jeweiligen Entfernungen zwischen der optischen Einrichtung 10 und den Punkten 22, 23, wie auch in Abhängigkeit von den Winkeln α, β ein Nickwinkel φ durch die Einstelleinrichtung 9 berechnet, um welchen das Kraftfahrzeug 1 geneigt ist. Beim Stillstand des Kraftfahrzeugs 1 gilt: φ = 0°. Wird das Kraftfahrzeug 1 beschleunigt bzw. abgebremst, so kann der Nickwinkel φ entsprechend variieren. Ein Nickwinkel φ größer als 0° kann sich auch im Stillstand des Kraftfahrzeugs ergeben, nämlich bei einer ungleichmäßigen Lastverteilung auf die Fahrzeugachsen.

Bezugnehmend nun auf die Fig. 2 und 3 wird die Bestimmung des Nickwinkels φ nachfolgend näher erläutert. Ist der Nickwinkel φ - wie in Fig. 2 gezeigt - gleich 0° so sind die jeweiligen Winkel, in denen die Lichtbündel 11, 12 auf die Straße 20 abgegeben werden, gleich α und β. Wird das Kraftfahrzeug 1 beispielsweise beschleunigt, so ist der Nickwinkel φ größer als 0°, und die optische Einrichtung 10 wird geneigt, wie in Fig. 3 gezeigt. Das erste Lichtbündel 11 wird nun bezüglich der Fahrzeughochachse 21 in einem Winkel β + φ abgegeben, während das Lichtbündel 12 unter einem Winkel α + φ abgegebenen wird (es wird hier angenommen, dass der Winkel α ein negativer Winkel ist). Die Einstelleinrichtung 9 misst die jeweiligen Entfernungen d1, d2 zwischen der optischen Einrichtung 10 und den Punkten 22, 23.

Es gilt folgende Beziehung:

$$d1 \cdot \cos(\alpha+\varphi) = h = d2 \cdot \cos(\beta+\varphi),$$

wobei h einen Abstand zwischen der optischen Einrichtung 10 und der Fahrbahn 20 bezeichnet. Daraus folgt:

$$d1 \cdot [\cos(\alpha) \cdot \cos(\varphi) - \sin(\alpha) \cdot \sin(\varphi)] = d2 \cdot [\cos(\beta) \cdot \cos(\varphi) - \sin(\beta) \cdot \sin(\varphi)].$$

Wird angenommen, dass der Nickwinkel $\varphi$ im Vergleich zu den Winkeln $\alpha$, $\beta$ betragsmäßig klein ist, so gilt:

$$d1 \cdot [\cos(\alpha) - \sin(\alpha) \cdot \varphi] = d2 \cdot [\cos(\beta) - \sin(\beta) \cdot \varphi].$$

Der Nickwinkel $\varphi$ ergibt sich daraus zu:

$$\varphi = [d1 \cdot \cos(\alpha) - d2 \cdot \cos(\beta)] / [d2 \cdot \sin(\alpha) - d2 \cdot \sin(\beta)]$$

Es wird klar, dass der berechnete Nickwinkel $\varphi$ unabhängig von dem jeweils augenblicklichen Abstand h zwischen der optischen Einrichtung 10 und der Fahrbahn 20 ist. Dies erhöht die Genauigkeit der Messung, da dieser Abstand h während der Beschleunigung bzw. während der Abbremsung des Kraftfahrzeugs 1 variieren kann.

Der Nickwinkel $\varphi$ wird nun durch die Einstelleinrichtung 9 bei der Einstellung der Ausrichtung 4 berücksichtigt. Die Einstelleinrichtung 9 berücksichtigt auch eine Streckenneigung der Fahrbahn 20. Zur Bestimmung dieser Streckenneigung wird das dritte Lichtbündel 13 verwendet.

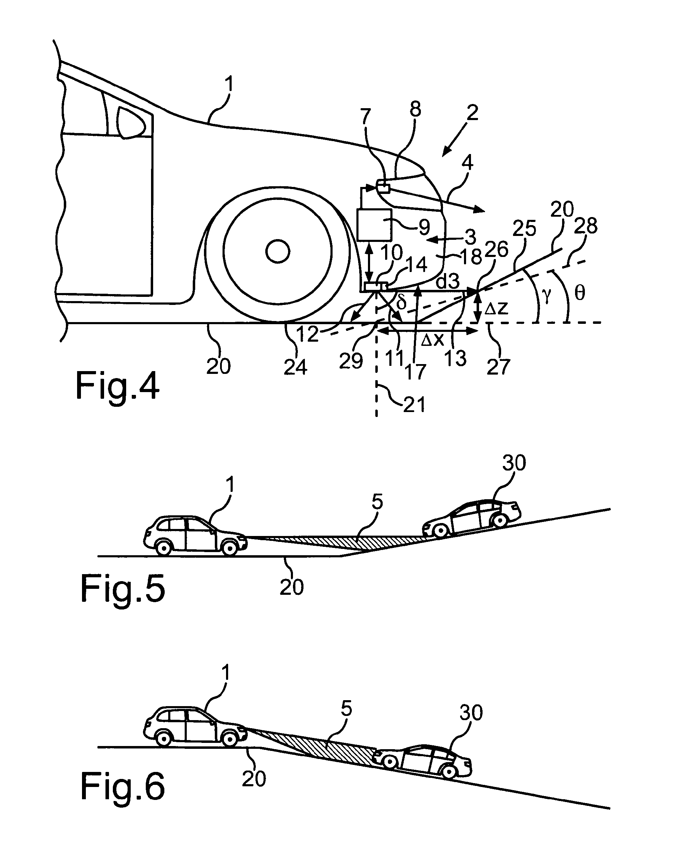

Bezugnehmend nun auf Fig. 4 wird die Bestimmung der Streckenneigung mithilfe des dritten Lichtbündels 13 näher erläutert: Das Kraftfahrzeug 1 befindet sich auf einem aktuellen Fahrbahnabschnitt 24; vor dem Kraftfahrzeug 1 befindet sich ein bevorstehender Fahrbahnabschnitt 25. Bei dem bevorstehenden Fahrbahnabschnitt 25 handelt es sich im Ausführungsbeispiel um eine Steigung der Fahrbahn 20. Der bevorstehende Fahrbahnabschnitt 25 schließt mit dem aktuellen Fahrbahnabschnitt 24 einen Winkel $\gamma$ ein. Mit anderen Worten ist der bevorstehende Fahrbahnabschnitt 25 bezüglich des aktuellen Fahrbahnabschnitts 24 geneigt, nämlich unter dem Winkel $\gamma$.

Die Bestimmung der Streckenneigung der Fahrbahn 20 bedeutet also, dass der Winkel $\gamma$ bestimmt wird. Dazu wird das dritte Lichtbündel 13 unter einem Winkel $\delta$ bezüglich der Fahrzeughochachse 21 ausgesendet, wie in Fig. 4 gezeigt. Der Winkel $\delta$ kann beispielsweise in einem Wertebereich von 45° bis 90° liegen, insbesondere in einem Wertebereich von 50° bis 80°. Dieser Winkel $\delta$ kann zum Beispiel 70° betragen. Das Lichtbündel 13 reflektiert an einem Punkt 26 des bevorstehenden Fahrbahnabschnitts 25, und das reflektierte Lichtbündel 13 wird durch die optische Einrichtung 10 wieder empfangen. Anhand der Laufzeit des Lichtbündels 13 bestimmt die Einstelleinrichtung 9 die Entfernung d3 zwischen der optischen Einrichtung 10 und dem Punkt 26, an welchem das Lichtbündel 13 reflektiert wird. Aus dem Abstand h zwischen der optischen Einrichtung 10 und der Fahrbahn 20 sowie aus der Entfernung d3 kann dann ein Abstand $\Delta z$ zwischen dem Punkt 26 und einer gedachten Verlängerungslinie 27 berechnet werden, die eine Verlängerung des aktuellen Fahrbahnabschnitts 24 darstellt:

$$\Delta z = h - d3 \cdot \cos(\delta).$$

Es kann auch ein horizontaler Abstand $\Delta x$ zwischen der optischen Einrichtung 10 und dem Punkt 26 entlang der Verlängerungslinie 27 berechnet werden:

$$\Delta x = d3 \cdot \sin(\delta).$$

Daraus ergibt sich ein Winkel $\Theta$ zwischen der Verlängerungslinie 27 bzw. dem momentanen Fahrbahnabschnitt 24 und einer Linie 28, welche durch den Punkt 26 sowie einen Punkt 29 verläuft, der auf der Fahrbahn 20 direkt unterhalb der optischen Einrichtung 10 liegt:

$$\Theta = \arctan(\Delta z / \Delta x).$$

Bei kleinen Entfernungen des Kraftfahrzeugs 1 von dem bevorstehenden Fahrbahnabschnitt 25 kann im Wesentlichen angenommen werden, dass $\Theta = \gamma$. Der Winkel $\Theta$ kann auch anhand des Nickwinkels $\varphi$ korrigiert werden. Vom Winkel $\Theta$ kann der Winkel $\varphi$ abgezogen werden.

Also kennt die Einstelleinrichtung 9 sowohl die jeweils augenblickliche Lage des Kraftfahrzeugs 1 bezüglich der Fahrbahn 20 bzw. den jeweils augenblicklichen Nickwinkel $\varphi$, wie auch die Streckenneigung - den Winkel $\gamma$. All diese Informationen werden zur Einstellung der Ausrichtung 4 des Lichts 5 herangezogen.

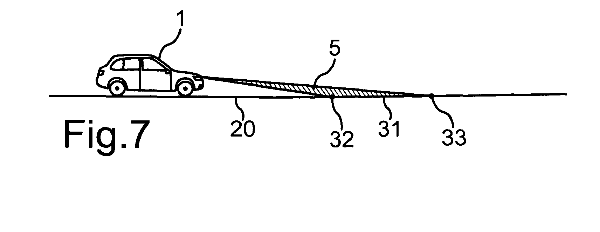

Wie in den Fig. 5 und 6 dargestellt ist, wird die Ausrichtung 4 des Lichts 5 in Abhängigkeit davon eingestellt, ob eine Steigung der Fahrbahn 20 oder aber ein Gefälle der Fahrbahn 20 erkannt wird. Wird eine Steigung erkannt - wie in Fig. 5 dargestellt - so wird die Ausrichtung 4 höher eingestellt als bei einer horizontalen Straße (Fig. 7). Auf diesem Wege wird erreicht, dass unabhängig von der Steigung der Bereich vor dem Kraftfahrzeug 1 stets bis zur gleichen Entfernung beleuchtet wird. Wird hingegen ein Gefälle erkannt, wie in Fig. 6 dargestellt, so wird das Licht 5 niedriger als bei einer geraden bzw. horizontalen Straße ausgerichtet. Auf diesem Wege gelingt es, eine Blendung eines entgegenkommenden Fahrzeugs 30 zu vermeiden. Es kann beispielsweise eine lineare Beziehung zwischen dem berechneten Winkel $\gamma$ und der Ausrichtung 4 des Lichts 5 gelten.

Auch die augenblickliche Lage des Kraftfahrzeugs 1 bezüglich der Fahrbahn 20 wird bei der Einstellung der Ausrichtung 4 berücksichtigt. In Fig. 7 ist das Kraftfahrzeug 1 auf der Fahrbahn 20 gezeigt, wobei in diesem Falle der Nickwinkel $\varphi$ gleich 0° ist. Das Kraftfahrzeug 1 steht beispielsweise still. In diesem Normalfall wird ein Bereich 31 vor dem Kraftfahrzeug 1 beleuchtet, dessen erste Grenze 32 in einer Entfernung von etwa 60 m vom Kraftfahrzeug 1 liegt und dessen zweite Grenze 33 in einer Entfernung vom Kraftfahrzeug 1 von beispielsweise 90 m liegt. Wird nun das Kraftfahrzeug 1 beschleunigt oder abgebremst oder ist die Lastverteilung ungleichmäßig, so wird die Ausrichtung 4 derart eingestellt, dass stets der gleiche Bereich 21 vor dem Kraftfahrzeug 1 beleuchtet wird. Dies bedeutet, dass die erste und die zweite Grenze 32, 33 jeweils in gleicher Entfernung vom Kraftfahrzeug 1 verbleibt, nämlich unabhängig von dem Nickwinkel $\varphi$.

## Patentansprüche

1. Verfahren zum automatischen Einstellen einer Ausrichtung (4) eines von einem Scheinwerfer (2) eines Kraftfahrzeugs (1) abgegebenen Lichts (5), mit den Schritten:

   - Abgeben eines ersten Lichtbündels (11) und eines zweiten Lichtbündels (12) auf eine Fahrbahn (20), auf welcher sich das Kraftfahrzeug (1) befindet, mittels einer optischen Einrichtung (10) und Empfangen der jeweiligen an der Fahrbahn (20) reflektierten Lichtbündel (11, 12), und
   Einstellen der Ausrichtung (4) des vom Scheinwerfer (3) abgegebenen Lichts (5) in Abhängigkeit von einer Auswertung der empfangenen Lichtbündel (11, 12), wobei das erste Lichtbündel (11) bezüglich einer Fahrzeuglängsrichtung (19) nach vorne auf die Fahrbahn (20) und das zweite Lichtbündel (12) nach hinten auf die Fahrbahn (20) gerichtet werden,
   **gekennzeichnet durch**
   - Abgeben eines dritten Lichtbündels (13) bezüglich der Fahrzeuglängsrichtung (19) nach vorne in einem vorbestimmten Winkel ($\delta$) bezüglich einer Referenzachse (21) derart, dass das Lichtbündel (13) an der Fahrbahn (20) reflektiert wird,
   - Empfangen des reflektierten dritten Lichtbündels (13) und Bestimmen einer Streckenneigung ($\gamma$) eines bevorstehenden Fahrbahnabschnitts (25) der Fahrbahn (20) bezüglich eines momentanen Fahrbahnabschnitts (24), auf welchem sich das Kraftfahrzeug (1) befindet, **durch** Auswertung des empfangenen dritten Lichtbündels (13) und
   - Einstellen der Ausrichtung des vom Scheinwerfer abgegebenen Lichts in Abhängigkeit von der Streckenneigung.

2. Verfahren nach Anspruch 1,
   **dadurch gekennzeichnet, dass**
   das dritte Lichtbündel (13) mittels einer Lichteinheit (14) abgegeben wird, welche in den Scheinwerfer (2) integriert ist oder an einer Unterseite (17) des Kraftfahrzeugs (1), insbesondere an einer Unterseite (17) eines vorderen Stoßfängers (18), oder hinter einer Windschutzscheibe (15) angeordnet ist.

3. Verfahren nach Anspruch 1 oder 2,
   **dadurch gekennzeichnet, dass**
   das dritte Lichtbündel (13) mittels einer Lichteinheit (14) abgegeben wird, welche in die optische Einrichtung (10) integriert ist.

**4.** Verfahren nach einem der Ansprüche 1 bis 3,
**dadurch gekennzeichnet, dass**
die Bestimmung der Streckenneigung (γ) umfasst, dass ein Winkel (γ) zwischen dem bevorstehenden Fahrbahnabschnitt (25) und dem momentanen Fahrbahnabschnitt (24) bestimmt wird.

**5.** Verfahren nach einem der Ansprüche 1 bis 4,
**dadurch gekennzeichnet, dass**
die Streckenneigung (γ) auch unter Berücksichtigung des empfangenen ersten und zweiten Lichtbündels (11, 12), insbesondere unter Berücksichtigung der aktuellen Lage (φ) des Kraftfahrzeugs (1) bezüglich der Fahrbahn (20), bestimmt wird.

**6.** Verfahren nach einem der Ansprüche 1 bis 5,
**dadurch gekennzeichnet, dass**
das dritte Lichtbündel (13) in einem solchen Winkel (δ) auf die Fahrbahn (20) gerichtet wird, dass bei einer geraden Fahrbahn (20) das dritte Lichtbündel (13) an einem Punkt der Fahrbahn (20) reflektiert wird, welcher in einem Abstand aus einem Wertebereich von 10 m bis 140 m vom Kraftfahrzeug (1) liegt.

**7.** Verfahren nach einem der Ansprüche 1 bis 6,
**dadurch gekennzeichnet, dass**
die Streckenneigung (γ) in Abhängigkeit von dem Winkel (δ), in welchem das dritte Lichtbündel (13) bezüglich der Referenzachse (21) abgegeben wird, und/oder in Abhängigkeit von einer Entfernung (d3) zwischen der Lichteinheit (14) und einem Punkt (26) des bevorstehenden Fahrbahnabschnitts (25) bestimmt wird, an welchem das dritte Lichtbündel (13) reflektiert wird.

**8.** Verfahren nach einem der vorhergehenden Ansprüche,
**dadurch gekennzeichnet, dass**
die optische Einrichtung (10) an einer Unterseite (17) des Kraftfahrzeugs (1), insbesondere an einer Unterseite (17) eines vorderen Stoßfängers (18), angeordnet ist.

**9.** Verfahren nach einem der vorhergehenden Ansprüche,
**dadurch gekennzeichnet, dass**
die Auswertung der empfangenen Lichtbündel (11, 12) beinhaltet, dass eine aktuelle Lage (φ) des Kraftfahrzeugs (1) bezüglich der Fahrbahn (20), insbesondere ein Nickwinkel (φ) des Kraftfahrzeugs (1), in Abhängigkeit von den empfangenen Lichtbündeln (11, 12) bestimmt wird.

**10.** Verfahren nach einem der vorhergehenden Ansprüche,
**dadurch gekennzeichnet, dass**
das erste und das zweite Lichtbündel (11, 12) in einer Ebene abgegeben werden, die parallel zu einer Ebene liegt, die durch die Fahrzeuglängsachse und die Fahrzeughochachse (21) definiert ist.

**11.** Verfahren nach einem der vorhergehenden Ansprüche,
**dadurch gekennzeichnet, dass**
das erste Lichtbündel (11) in einem ersten Winkel (β) bezüglich der Fahrzeughochachse (21) abgegeben wird, welcher in einem Wertebereich von 10° bis 60°, insbesondere von 10° bis 45°, liegt, und/oder das zweite Lichtbündel (12) in einem zweiten Winkel (α) bezüglich der Fahrzeughochachse (21) abgegeben wird, welcher in einem Wertebereich von 10° bis 60°, insbesondere von 10° bis 45°, liegt.

**12.** Verfahren nach einem der vorhergehenden Ansprüche,
**dadurch gekennzeichnet, dass**
das erste und das zweite Lichtbündel (11, 12) in einem Winkel (α + β) relativ zueinander abgegeben werden, der in einem Wertebereich von 20° bis 120°, insbesondere in einem Wertebereich von 40° bis 90°, liegt.

**13.** Verfahren nach einem der vorhergehenden Ansprüche,
**dadurch gekennzeichnet, dass**
eine Lage (φ) des Kraftfahrzeugs (1) bezüglich der Fahrbahn (20), insbesondere ein Nickwinkel (φ) des Kraftfahr-zeugs (1), in Abhängigkeit von Entfernungen (d1, d2) zwischen der optischen Einrichtung (10) und jeweiligen Punkten (22, 23) der Fahrbahn (20), an denen die Lichtbündel (11, 12) reflektiert werden, und/oder in Abhängigkeit von jeweiligen Winkeln (α, β) bestimmt wird, in denen die Lichtbündel (11, 12) bezüglich einer Referenzachse (21) abgegeben werden.

14. Vorrichtung (3) zum automatischen Einstellen einer Ausrichtung (4) eines von einem Scheinwerfer (2) eines Kraftfahrzeugs (1) abgegebenen Lichts (5), mit:

- einer optischen Einrichtung (10) zum Abgeben eines ersten Lichtbündels (11) und eines zweiten Lichtbündels (12) auf eine Fahrbahn (20) und zum Empfangen der jeweiligen an der Fahrbahn (20) reflektierten Lichtbündel (11, 12), und
- einer Einstelleinrichtung (9) zum Einstellen der Ausrichtung (4) des vom Scheinwerfer (2) abgegebenen Lichts (5) in Abhängigkeit von einer Auswertung der empfangenen Lichtbündel (11, 12),
**dadurch gekennzeichnet, dass**
die optische Einrichtung (10) dazu ausgebildet ist, das erste Lichtbündel (11) in Fahrzeuglängsrichtung (19) nach vorne auf die Fahrbahn (20) und das zweite Lichtbündel (12) nach hinten auf die Fahrbahn (20) abzugeben.

Fig.1

Fig.2

Fig.3

Fig.4

Fig.5

Fig.6

Fig.7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0104659 A1
- US 5633710 A1
- EP 0858931 B1
- US 6709135 B2
- DE 60300794 T2